(19) **Europäisches Patentamt**
**European Patent Office**
**Office européen des brevets**

(11) **EP 4 575 690 A1**

(12) **EUROPEAN PATENT APPLICATION**

(43) Date of publication:
25.06.2025   Bulletin 2025/26

(51) International Patent Classification (IPC):
**G05B 23/02** (2006.01)        **G06N 7/01** (2023.01)
**G06N 20/00** (2019.01)

(21) Application number: **24220930.2**

(22) Date of filing: **18.12.2024**

(52) Cooperative Patent Classification (CPC):
**G05B 23/0254; G06N 7/01; G06N 20/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **22.12.2023   IT 202300027966
22.12.2023   IT 202300027975**

(71) Applicant: **ANSALDO ENERGIA S.p.A.
16152 Genova (IT)**

(72) Inventors:
• **STANCHI, Paolo**
**16152 Genova (IT)**
• **FANCIULLI, Francesco**
**16152 Genova (IT)**
• **GHETTINI, Simone**
**16152 Genova (IT)**

(74) Representative: **Studio Torta S.p.A.
Corso Magenta, 56
20123 Milano (IT)**

(54) **DIAGNOSTIC SYSTEM FOR A POWER PLANT BASED ON MIXTURE MODEL**

(57)    A computer-implemented method of diagnosing faults in a power plant, includes: acquiring plant data through an interface (2a) for coupling with at least one power plant (1); creating databases (9) from the plant data provided by the data acquisition level (2a), managing and accessing the databases (9); training a plant model for providing estimated plant outputs ($Y_E$), based on a series of training observed input variables ($X_{OTR}$), selected from the plant data; validating the trained plant models based on the plant data from the at least one power plant (1) and/or the databases (9); and using the trained model to continuously provide estimated plant outputs ($Y_E$) based on current observed variables ($X_{OC}$) of the power plant (1) during operation of the power plant (1). The plant model is a Gaussian mixture model with a programmed number of states (M), training comprises carrying out a first expectation-maximization procedure (230, 240) and validating comprises carrying out a second expectation-maximization procedure (330-360).

```
     ┌─────────────────────────────┐
300 ─┤ DOWNLOAD AND CLEAN          │
     │ VALIDATION DATA Dᵥ          │
     └─────────────────────────────┘
                  │
     ┌─────────────────────────────┐
     │ NORMALIZE                   │
     │ VALIDATION DATA Dᵥ          ├─ 310
     └─────────────────────────────┘
                  │
     ┌─────────────────────────────┐
320 ─┤ INITIALIZE Σ_SUM, Θ         │
     └─────────────────────────────┘
                  │
     ┌─────────────────────────────┐
330 ─┤ EXPECTATION                 │
     │ DETERMINE P(i|X_K)          │
     └─────────────────────────────┘
                  │
     ┌─────────────────────────────┐
     │ DETERMINE y(i), y_E         ├─ 340
     └─────────────────────────────┘
                  │
     ┌─────────────────────────────┐
350 ─┤ MAXIMIZATION                │
     │ DETERMINE Θ, UPDATE Σ_SUM   │
     └─────────────────────────────┘
                  │
        YES  ◇ ΔL < TH ◇ NO  ─ 360
     ┌─────────────────────────────┐
370 ─┤ TERMINATE                   │
     │ VALIDATION                  │
     └─────────────────────────────┘
```

FIG. 5

**EP 4 575 690 A1**

**Description**

CROSS-REFERENCE TO RELATED APPLICATIONS

This patent application claims priority from Italian patent applications no. 102023000027966 and no. 102023000027975, both filed on December 22, 2023, the entire disclosure of which is incorporated herein by reference.

TECHNICAL FIELD

The present invention relates to a diagnostic system for a power plant based on mixture model.

BACKGROUND

As known, large and complex plants, such as gas turbine power plants or combined cycle power plants, need to be constantly monitored in order to ensure correct operation, schedule appropriate maintenance activities, maintaining high level of performance with minimized degradation and avoid or minimize downtimes. Monitoring and diagnostic system have been designed for this purpose. Normally, huge amounts of data are collected on the field through sets of plant sensors and sent to remote stations for processing. Data are also available to improve plant modeling, which is more and more often achieved through machine learning techniques. Even though several solutions are known and available, there is anyway a need for monitoring systems that may be flexibly adapted to specific components of individual plants, without an excessive burden in terms of design complexity.

SUMMARY OF THE INVENTION

It is thus an object of the present invention to provide a diagnostic system for a power plant that allows to overcome or at least attenuate the above described limitations.
According to the present invention, there is provided a diagnostic system for a power plant as defined in claim 1.

BRIEF DESCRIPTION OF THE DRAWINGS

The present invention will now be described with reference to the accompanying drawings, which illustrate some non-limitative embodiments thereof, in which:

- figure 1 is a simplified block diagram of a diagnostic system in accordance with an embodiment of the present invention;
- figure 2 is a more detailed block diagram of the diagnostic system of figure 1;
- figure 3 is a simplified flow chart of a computer-implemented method of diagnosing faults in a power plant carried out by the diagnostic system of figure 1;
- figures 4 and 5 are a more detailed flow chart of steps of the method of figure 3, in accordance with an embodiment of the present invention;
- figures 6-12 are more detailed flow charts of further steps of the method of figure 3;
- figure 13 is a graph showing quantities relating to the method of figures 6-12;
- figure 14 is a more detailed flow chart of further steps of the method of figure 3;
- figure 15 is a graph showing further quantities relating to the method of figures 6-12;
- figure 16 is a more detailed flow chart of further steps of the method of figure 3;
- figure 17 is a graph showing further quantities relating to the method of figures 6-12.

DETAILED DESCRIPTION OF EXEMPLARY EMBODIMENTS

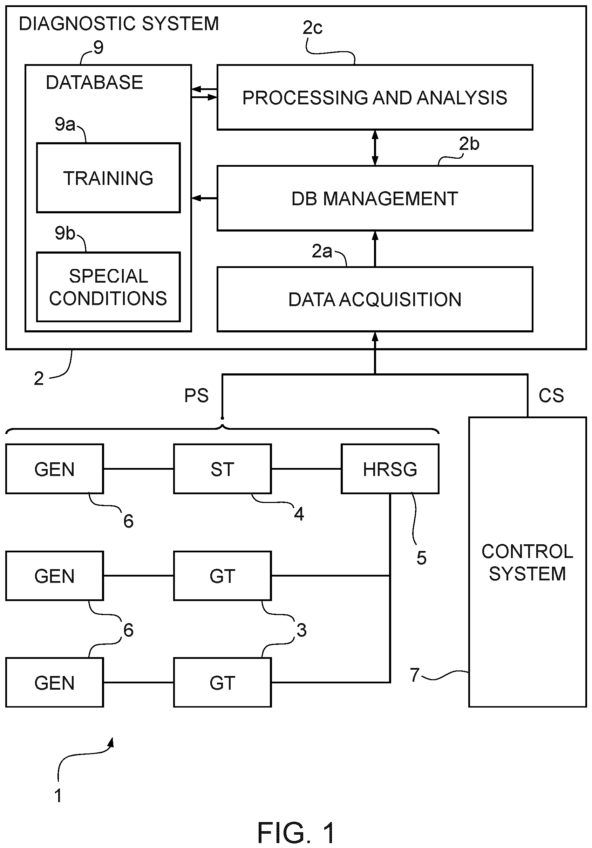

Figure 1 shows a power plant, generally designated by numeral 1, and a diagnostic system 2 made in accordance with an embodiment of the present invention and coupled in communication with the power plant 1. In one embodiment, the power plant 1 may be a combined cycle power plant and may comprise one or more gas turbines 3, a steam turbine 4, a heat recovery steam generator 5, one or more electric generators 6 and a distributed control system (DCS) 7. It is however understood that the invention may be advantageously exploited also for other kinds of industrial plants.
In one embodiment, the diagnostic system 2 is organized in three hierarchical levels. A lower level or data acquisition level 2a forms an interface with the power plant 1 and receives plant signals PS, from plant and diagnostic sensors (not shown) and control signals CS from the distributed control system 7. The data acquisition level 2a of the diagnostic system 2 is configured to organize and group the plant signals PS based on type of analysis to be carried out (e.g. vibration, combustion) and to extract quantities of interest for processing from the data received, in particular from the plant signals PS. In particular, the data acquisition level 2a may also include processing functions aimed at extracting information from raw signals, such as Fourier transform.

An intermediate level or database level 2b is configured to create, manage and access databases 9 from data provided by the data acquisition level 2a. Databases 9 are created and continuously fed so as to provide a consistent and usable information source for subsequent processing and analysis. Databases 9 include normal-operation reference database sections 9a, that contain data validated as representing good-functioning conditions of the power plant 1. In other words, data generated by the power plant 1 during normal operation and in the absence of any fault or malfunctioning may be collected and stored in the normal-operation reference database sections 9a of the databases 9. The database 9 may also comprise additional reference database sections 9b, that contain data associated with specific operating conditions, including faulty operating conditions. Data of the additional reference database sections 9b may be used for classification of malfunctions and estimation of time-to-fault.

A top or data processing and analysis level 2c is configured to carry out high level data processing and analysis to implement diagnostic functions as required. The data processing and analysis level 2c is normally centralized for a plurality of power plants and may synchronously and/or asynchronously receive information relating to activities of configuration and maintenance of the power plant 1.

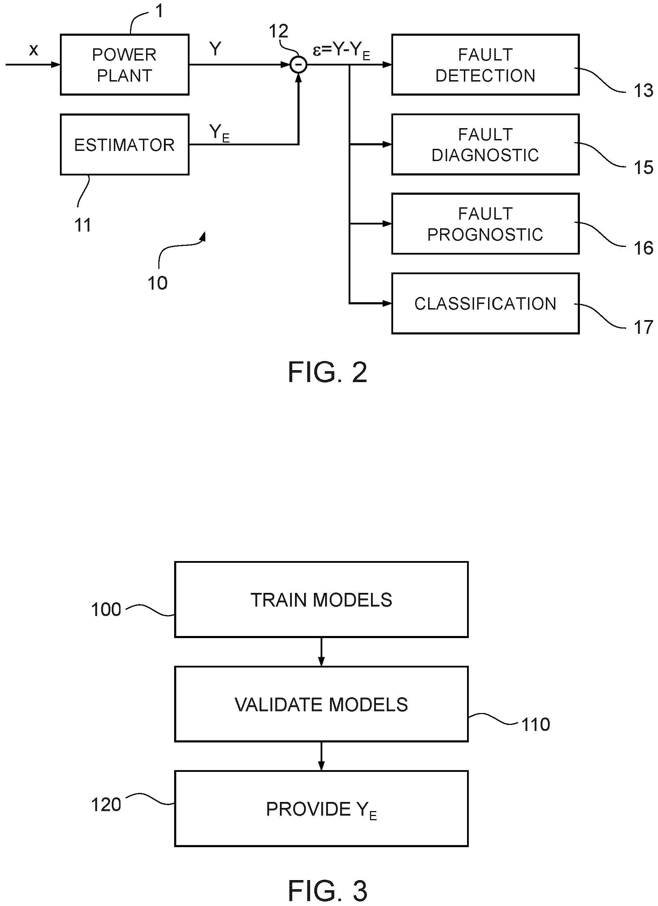

In particular, the data processing and analysis level 2c of the diagnostic system 2 comprises a diagnostic unit 10 which in turn includes, as illustrated in figure 2, an estimator module 11, a subtractor node 12, a fault detection module 13, a fault diagnostic module 15 a fault prediction module 16 and a classification module 17. The diagnostic system 2 and each of its components may include a computer and computer readable instructions loaded on it.

As explained in detail later on, the estimator module 11 is configured to define parameters of plant models that, once trained, provide estimated values (plant outputs) $Y_E$ of selected plant outputs Y, based on a series of training observed input variables $X_{OTR}$ which have been selected as corresponding to proper operation of the power plant 1. The estimator module 11 is also configured to use the trained models to continuously provide estimated plant outputs $Y_E$ based on current observed variables $X_{OC}$ of the power plant 1 during normal operation. The current observed variables $X_{OC}$ may be directly received from the power plant 1 or from the data acquisition level 2a as an interface between the estimator module 11 and the power plant 1, or may be temporarily stored in and read from the databases 9, in accordance with design preferences.

At the subtractor node 12, estimated plant outputs $Y_E$ are subtracted from current plant outputs $Y_C$ obtained from the power plant 1, thus determining residuals $\varepsilon$.

The residuals $\varepsilon$ are fed to the fault detection module 13, the fault diagnostic module 15, the fault prediction module 16 and the classification module 17 for processing.

The fault diagnostic module 15 is configured to determine causes of detected malfunctions based e.g. on signal correlation analysis or classification algorithms trained on data representing examples of correct and incorrect operation possibly from different plants.

The fault prediction module 16 is configured to determine an expected time-to-fault based on comparison of detected trends in the residuals $\varepsilon$ and safety thresholds and/or expected trends, which may be defined by design or based on reference data contained in the reference sections 9a of the databases 9. Expected time-to-fault is particularly beneficial to scheduling of maintenance activities and to assess the severity of the incoming abnormal behaviour or performance degradation.

The classification module 17 is configured to trigger protective actions as a result of a positive fault detection by the fault detection module 13. Protective actions may include, by way of example, warnings, control corrections, grid disconnection and shutdown, depending on severity of the detected fault. In particular, early warnings may be advantageously generated in advance of actually dangerous situations or performance degradation by monitoring trends in the residuals $\varepsilon$. The selection of appropriate protective actions may be based also on fault cause analysis carried out by the fault diagnostic module 15.

As already mentioned, the estimator module 11 is configured to define parameters of plant models that describe parts of the power plant 1 and may be used to provide estimated values $Y_E$ of output variables Y (or simply estimated plant outputs $Y_E$). A model is configured to provide expected values of the output variables in response to corresponding observed values $X_O$ of the input variables X, on the condition that the underlying system is properly operating. The input variables X are (actual) observations of a first set of plant variables and the output variables Y are estimated values of a second set of plant variables, that describe the state of the system. The input variables and the output variables may include observed values and estimated variables of the same plant variables, respectively. The output variables Y may be a subset of the input variables X, i.e. a state of the plant, that includes also the output variables Y, may be estimated based on observed values that include observed inputs and observed outputs.

For a combined cycle power plant, examples of models may include a gas turbine engine combustion model, a gas turbine engine vibration model and an air condenser model.

As illustrated in figure 3, the estimator module 11 is more precisely configured to train the models (block 100), whereby model parameters are determined, to validate the trained models (block 110) by carrying out offline tests and, once the models have been trained and validated, to provide the estimated plant outputs $Y_E$ using the trained models (block 120).

In a first operation mode, the models are defined by determining a programmed number of states from a set of training data based on Gaussian Mixture Model. States are associated with Gaussian distributions, which define the probability that combinations of the variables (specifically, observations) belong to the respective state. In other words, a i-th Gaussian distribution for the i-th state defines the probability that observations belongs to the i-th state. The Gaussian distribution of each state is determined by respective parameters, that include:

- priors PRi, i.e. prior probability for each i-th state that a observations belong to a that i-th state;
- $\mu$, i.e. a vector defining the centroid of a state of a number of states D in a M-dimensional space, M being the number of variables; and
- $\Sigma$, i.e. the D x D covariance matrix for each state.

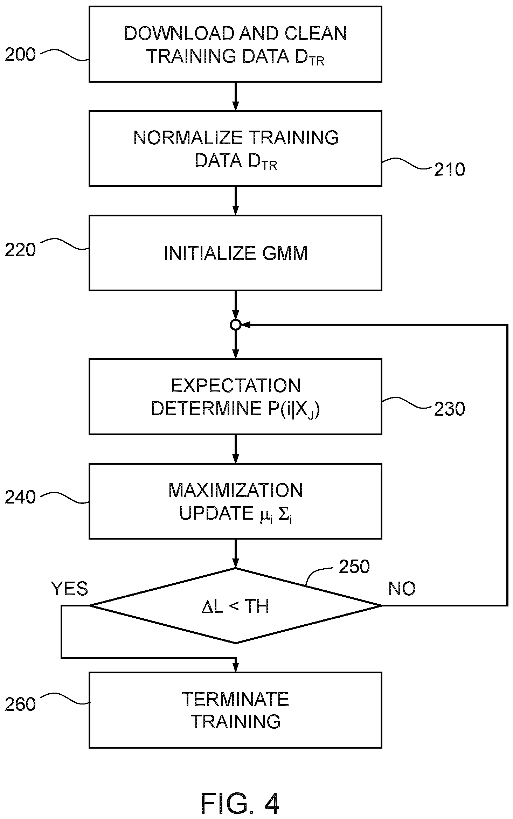

Figure 4 shows in greater detail the training procedure. Preliminarily, a set of training data $D_{TR}$ is downloaded from one or more of the reference database sections 9a and the training data $D_{TR}$ are cleaned (block 200). As belonging to one of the reference database sections 9a, the training data $D_{TR}$ correspond to periods in which the power plant 1 is correctly operating. With respect to training and monitoring needs, data stored in the databases 9 may be (and normally are) oversampled. Thus, a lower training sampling rate may be set as required and the training data $D_{TR}$ may re-sampled at the training sampling rate. The training data $D_{TR}$ include a number N of training observations $X_{OTR}$ of M variables that correspond to proper operating conditions of the plant or plant portion underlying the model being trained:

$$X_{OTR} = \begin{bmatrix} X_{OTR11} & \cdots & X_{OTR1M} \\ \cdots & X_{OTRjk} & \cdots \\ X_{OTRN1} & \cdots & X_{OTRNM} \end{bmatrix}$$

Cleaning the training data $D_{TR}$ may include removing meaningless data, such as outliers or data relating to shutdown periods.

Then, the selected training data $D_{TR}$ are normalized (block 210), i.e. normalized training observations $X_{OTRNik}$ are determined, for example based on the following relationship

$$X_{OTRNjk} = \frac{X_{OTRjk} - \min(X_{OTRk})}{\max(X_{OTRk}) - \min(X_{OTRk})} \quad (j = 1, \ldots, N; \ k = 1; \ldots, M) \quad (1)$$

where $X_{OTRjk}$ is a training observation of the training data $D_{TR}$ for the variable $X_k$, $\min(X_{OTRk})$ and $\max(X_{OTRk})$ are the minimum and maximum value of the training observations $X_{OTR}$ for the variable $X_k$, respectively, over the set of the training data $D_{TR}$.

After normalization, parameters of the Gaussian Mixture Model are initialized using a programmed number of states NS, which may be defined empirically for each model (block 220).

Advantageously, initialization may be made by k-means algorithm for priors PRi and centroids $\mu_i$ parameters and empirically as a diagonal matrix for covariance $\Sigma i$ parameters.

Once priors PRi, centroids $\mu_i$ and covariance $\Sigma i$ parameters have been initialized, proper training is carried out through an iterative Expectation-Maximization or EM process. Specifically, in an Expectation step (block 230), posterior probabilities $P(i|X_{OTRJ})$ for each i-th state conditional to a given training observation $X_{OTRJ}$ of the training data $D_{TR}$ are determined. A cumulated posterior probability $\Sigma_i P(i|X_{OTRJ})$ is also calculated in the Expectation step.

In a Maximization step (block 240), priors PRi, centroids $\mu_i$ and covariance $\Sigma_i$ parameters are updated using the cumulated posterior probability $\Sigma_i P(i|X_{OTRJ})$ resulting from the Expectation step.

Then, a training likelihood function $L_{TR}$, e.g. a log likelihood function, is determined, using the priors $PR_i$, centroids $\mu_i$ and covariance $L_i$ parameters calculated in the Maximization step. If an absolute value of a difference between the current training likelihood function $L_{TR}$ and the training likelihood function $L_{TR}$ computed in the immediately previous iteration is below a programmed training threshold $TH_{TR}$ (block 250, output YES), the training is terminated (block 260), otherwise (block 250, output NO), if the difference exceed the training threshold $TH_{TR}$, another iteration of the Expectation step, of the Maximization step and of comparing the difference with the training threshold $TH_{TR}$ (blocks 230-250) is carried out. The training threshold $TH_{TR}$ may be set in accordance with design preferences. In the first iteration of the EM process, the previous value of the training likelihood function $L_{TR}$ may be set to an initialization value in accordance with design preferences. When the training likelihood function $L_{TR}$ no longer significantly changes in subsequent iterations, the training process is arrested and the models are defined by the resulting training parameters, in particular $\mu_i = \mu_{TRi}$ and $\Sigma i =$

$\Sigma_{TRi}$ (block 260).

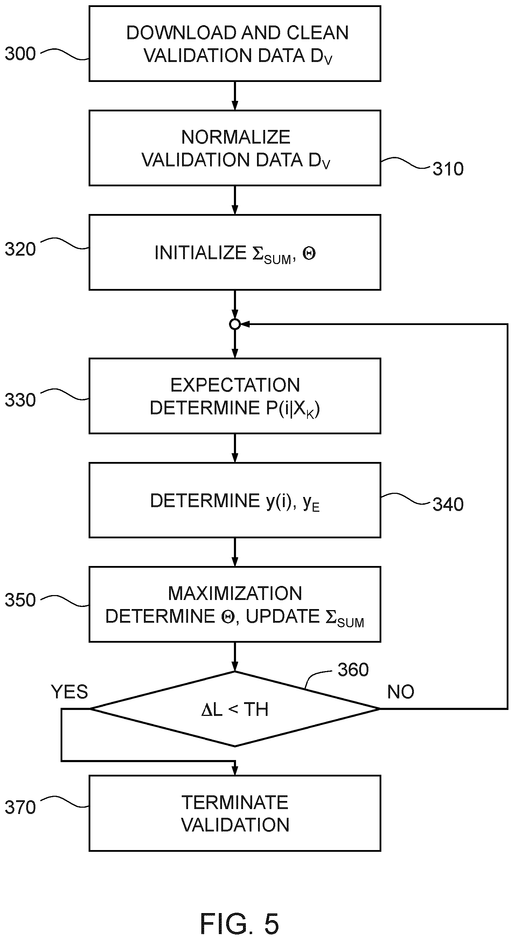

A flowchart of the validation procedure for the trained models is shown in figure 5.

A set of validation data $D_V$ is downloaded from the databases 9 and the validation data $D_V$ are cleaned (block 300). The validation data $D_V$ include observations $X_{OV}$ that do not necessarily correspond to proper operating conditions of the power plant 1.

Then, the selected validation data $D_V$ are normalized (block 310), i.e. normalized validation observations $X_{OVNjk}$ are determined, for example based on the following relationship

$$X_{OVNij} = \frac{X_{OVjk} - \min(X_{OTRk})}{\max(X_{OTRk}) - \min(X_{OTRk})} \qquad (2)$$

where $X_{OV}$ is a validation observation of the validation data $D_V$, $\min(X_{OTRk})$ and $\max(X_{OTRk})$ are the minimum and maximum value of the training observations $X_{OTR}$, respectively, over the set of the training data $D_{TR}$.

Validation is based on an iterative Expectation-Maximization Gaussian-Mixture-Regression or EM-GMR process, which is based on the parameters of the trained model, as defined by the procedure described above with reference to figure 4.

Specifically, an optimized covariance matrix $\Sigma_{SUM}$ is defined as

$$\Sigma_{SUM} = \Sigma_{TR} + \Theta \qquad (3)$$

where $\Sigma_{TR}$ is the covariance matrix resulting from the training process and $\Theta$ is an optimizing matrix that is iteratively updated based on the validation data $D_V$. The optimized covariance matrix $\Sigma_{SUM}$ is initialized as $\Sigma_{SUM} = \Sigma_{TR}$ in a first iteration of the validation procedure (block 320).

In an Expectation step (block 330), posterior probabilities $P(i|X_{OVK})$ for each i-th state conditional to a given validation observation $X_{OVK}$ of the validation data Dv are determined.

Then (block 340), state expected outputs y(i) are determined for each i-th state based on the state centroids $\mu_i$ and the current optimized covariance matrix $\Sigma_{SUM}$. The current optimized covariance matrix $\Sigma_{SUM}$ is equal to the training covariance matrix $\Sigma_{TR}$ during the first iteration and is given by equation (3) during subsequent iterations. The state expected outputs y(i) are combined to determine the estimated plant outputs $Y_E$ for the current iteration.

In a Maximization step (block 350), the optimizing matrix $\Theta$ is determined based on the posterior probability $P(i|X_{OVK})$ resulting from the Expectation step and a distance (e.g. Euclidean distance) $X_{OVK} - \mu_i$ between the current validation observations $X_{OVK}$ and the centroid $\mu_i$ of each i-th state of the Gaussian Mixture Model. The optimizing matrix $\Theta$ is determined such as to maximize, for each i-th state, the probability that the current validation observations $X_{OV}$ belongs to that i-th state. Once the optimizing matrix $\Theta$ has been determined, the optimized covariance matrix $\Sigma_{SUM}$ is updated in accordance with equation (3).

Then (block 360), a validation likelihood function $L_V$, e.g. log likelihood function, is determined. If an absolute value of a difference between the current validation likelihood function $L_V$ and the validation likelihood function Lv computed in the previous iteration is below a validation threshold $TH_V$ (block 370, output YES), the validation is terminated (block 380), otherwise (block 370, output NO), if the difference exceed the validation threshold $TH_V$, another iteration of the Expectation step, of the Maximization step and of comparing the difference with the validation threshold $TH_V$ (blocks 330-360) is carried out. In a first iteration, the previous value of the validation likelihood function $L_V$ may be set to an initialization value. The validation threshold $TH_V$ may be, but not necessarily is, the same as the training threshold $TH_{TR}$.

The procedure is repeated for each validation observation $X_{OV}$ of the set of validation data $D_V$. Processing may be carried out in parallel for several validation observations $X_{OV}$.

Validation residuals $\varepsilon_V$ are then determined from predictions based on the trained model. For example, the validation residuals $\varepsilon_V$ may be compared to a prediction validation threshold to determine accuracy of the predictions.

After the validation procedure, the diagnostic system 2 is run on the power plant 1. In practice, the iterative Expectation-Maximization Gaussian-Mixture-Regression or EM-GMR procedure of figure 5 is repeated on real-time observations $X_{RT}$ received from the power plant 1 to determine the estimated plant outputs $Y_E$, which are then compared to the current plant outputs $Y_C$ at the subtractor node 12 to determine the residuals $\varepsilon$. In this case, a single real-time observation $X_{RT}$ is processed at a time, to produce a corresponding estimated plant output $Y_E$.

New real-time observations $X_{RT}$ may be acquired at the sampling rate defined during the training stage. Moreover, data may be directly received from the data acquisition level 2a or downloaded from the database 9.

Normalization of the real-time observations $X_{RT}$ may be based on minimum and maximum values of each variable in the set of training data $D_{TR}$ used for training.

In a second operation mode, the models are defined on the basis of selection of principal components and regressions of selected principal component. Use of principal component analysis and selection of principal components allow to avoid possible overfitting during the training phase, which is possible when least square regression is applied and input variables are highly correlated as in the case of power plants (multicollinearity). The model may in this case adhere too much to training data and predictions may not be generalized to datasets other than the training data $D_{TR}$. The estimator module 11 is configured to define, in the second operating mode, parameters of plant models that provide estimated plant outputs $Y_E$ of respective individual output variables Y. In other words, each model provides estimated plant outputs $Y_E$ of a single respective output variable Y; different models may provide estimates of different output variables Y.

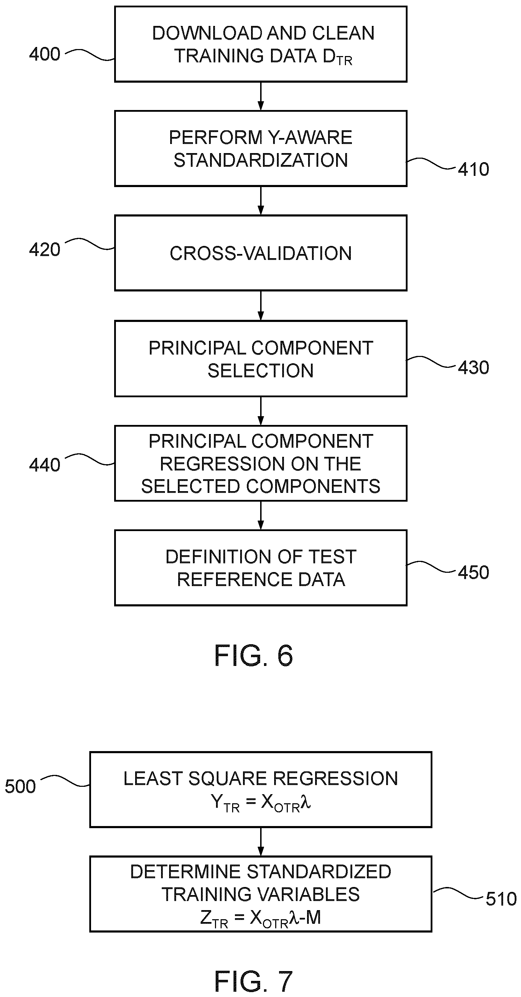

As illustrated in figure 6, at the beginning of the training procedure for a model and the corresponding output variable Y, a set of training data $D_{TR}$ is downloaded from one or more of the normal-operation reference database sections 9a and the training data $D_{TR}$ are cleaned, substantially as already described (block 400). The training data $D_{TR}$ include a number N of training observations $X_{OTRi}$ (i = 1, ..., N) of M input variables and of an output variable of the model, respectively, but need not be the same used in the first operating mode.

Then, Y-aware standardization is carried out (block 410), i.e. standardization keeps into account a relation between the training input observations $X_{OTR}$ and training output observations $Y_{OTR}$ of the model.

Y-aware standardization is followed by cross-validation procedure based on principal component regression (block 420), by principal component selection (block 430), by principal component regression on the selected principal components (block 440) and definition of test reference data (block 450).

As shown in detail in figure 7, Y-aware standardization includes performing a standardization least square regression (block 500), which provides a standardization regression vector $\lambda$ of standardization regression coefficients $\lambda_i$ so that

$$Y_{OTR} = X_{OTR}\lambda \qquad (4)$$

Then (block 510), standardized training variables $Z_{TRi}$ are determined based on the equation

$$Z_{TRi} = X_{OTRi}\lambda_i - M_i \qquad (5a)$$

or

$$Z_{TR} = X_{OTR}\lambda - M \qquad (5b)$$

where $Z_{TR} = [Z_{TR1} ... Z_{TRi} ... Z_{TRM}]$, $X_{OTRi}$ is a vector of training observations of the i-th variable, $M_i = Mean(\lambda_i X_{OTRi})$ and $M = [M_1 ... M_i ... M_M]$. Standardization is made for every vector of training observations $X_{OTRi}$. The standardized training variables $Z_{TRi}$ have therefore zero empirical mean.

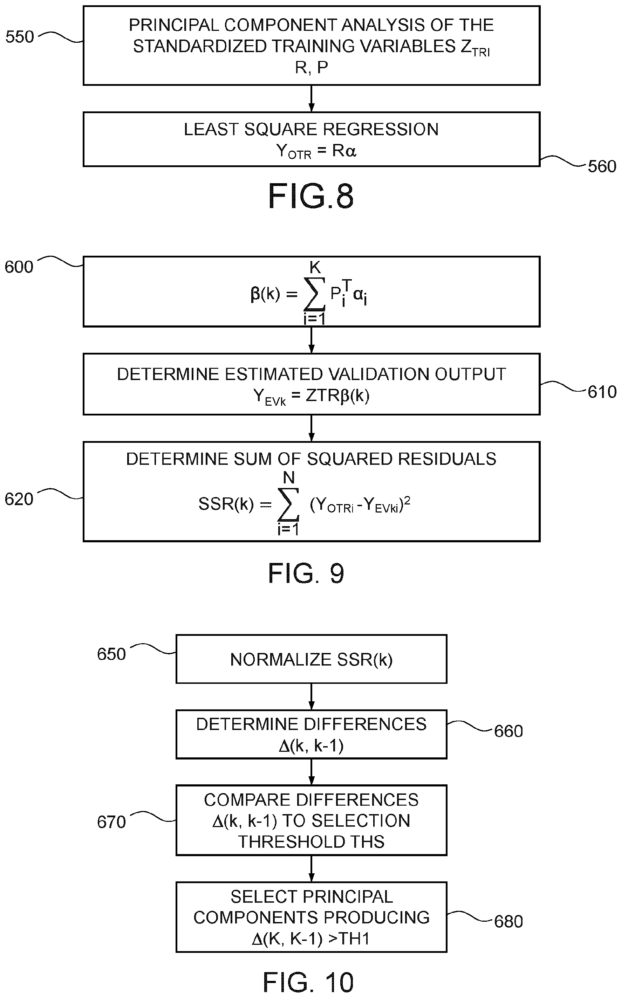

After Y-aware standardization, cross-validation based on principal component regression (figure 6, block 420) is carried out, starting with principal component analysis of the standardized training variables $Z_{TRi}$ (figure 8, block 550). As a result, the principal component analysis provides a full scores matrix R and a full loadings matrix P. The full scores matrix R allows change of coordinates between the native coordinate system of the standardized training variables $Z_{TRi}$ and a coordinate system of the principal components, which are all mutually orthogonal and therefore completely uncorrelated from each other. More specifically, the full scores matrix R represents the standardized training variables $Z_{TRi}$ in the coordinate system of the principal components and the full loadings matrix P represents the contributions of the native coordinates to the principal component coordinates.

The principal component analysis is followed by a principal component least square regression (principal component regression, block 560), which is applied in the coordinate system of the principal components. The principal component least square regression offers a principal component regression vector $\alpha$ of principal component regression coefficients $\alpha_i$ so that

$$Y_{OTR} = R\alpha \qquad (6)$$

Cross-validation procedure based on principal component regression (figure 6, block 420) is then carried out iteratively, starting with the first principal component, and adding one more principal component at every k-th iteration, in particular the k-th principal component. Every iteration of the cross-validation procedure begins with a transformation of the principal component regression coefficients $\alpha_i$ (figure 9, block 600) based on the full loadings matrix P provided by the previous principal component analysis. Transformed regression coefficients $\beta(k)$ for the current k-th iteration are defined as follows:

$$\beta(k) = \sum_{i=1}^{K} P_i^T \alpha_i = P\alpha \qquad (7)$$

An estimated training output $Y_{ETRk}$ is then determined based on the transformed regression coefficients $\beta(k)$ and

the standardized training variables $Z_{TRi}$ for the current iteration (block 610):

$$Y_{ETRk} = Z_{TR}\beta(k) \tag{8}$$

A sum of squared residuals SSR(k) is determined as follows (block 620):

$$SSR(k) = \sum_{i=1}^{N}(Y_{OTRi} - Y_{ETRki})^2 \tag{9}$$

The steps from block 600 to block 620 are repeated until all the principal components have been included.

Then, the procedure for automated selection of a subset of the principal components is carried out (figure 6, block 430).

All the sums of squared residuals SSR(k) are first normalized to a programmed range, e.g. to span the interval [0, 1] (figure 10, block 650).

Then, differences $\Delta(k, k-1)$ between any pair of consecutive sums of squared residuals SSR(k), SSR(k-1) are calculated (block 660) and compared to a selection threshold TH1 (block 670).

All principal components are selected (block 680), which correspond to pair of consecutive sums of squared residuals SSR(k), SSR(k-1) producing differences $\Delta(k, k-1)$ greater than the selection threshold TH1 in absolute value (since the squared residuals SSR(k) are monotonically decreasing as k increases, the differences $\Delta(k, k-1)$ are all negative and decreasing in absolute value; it would be equally possible to select the principal components which correspond to pair of consecutive sums of squared residuals SSR(k), SSR(k-1) producing differences $\Delta(k, k-1)$ smaller than a negative selection threshold).

Afterwards, principal component regression is carried out for the selected principal components (figure 6, block 440).

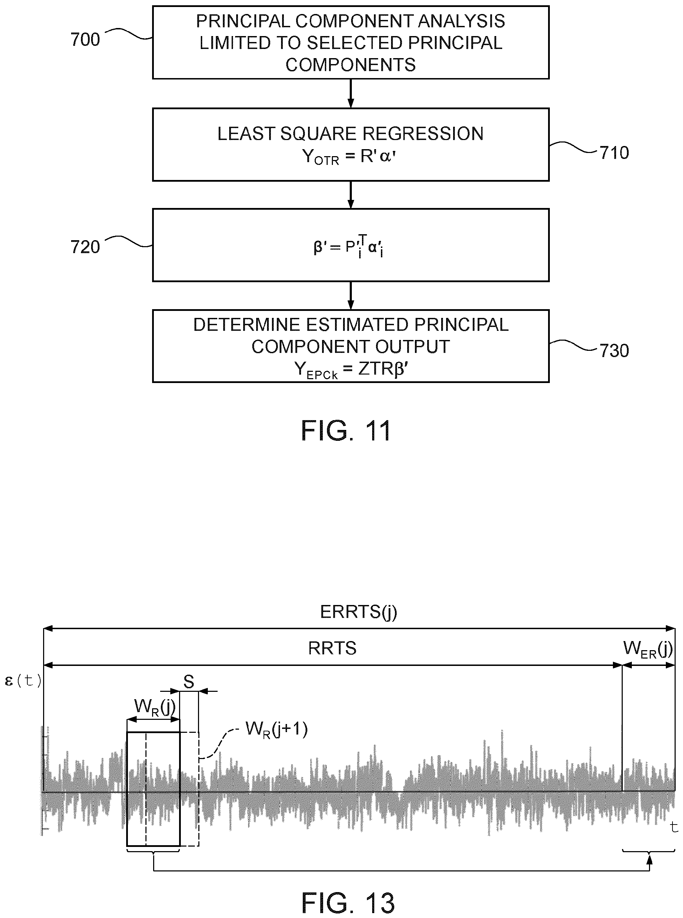

Specifically, principal component analysis is applied, limited to the selected principal components (figure 11, block 700), thus producing a principal component scores matrix R' (which is a sub-matrix of the full scores matrix R) and a principal component loadings matrix P' (which is a sub-matrix of the full loadings matrix P). In other words, principal component analysis is terminated after as many principal components have been determined as the selected principal components; the principal component scores matrix R' and the principal component loadings matrix P' may be directly derived from the full scores matrix R and from the full loadings matrix P, respectively, by extracting corresponding columns.

A selected components least square regression is carried out (block 710), limited to the selected principal components, and provides a selected components regression vector $\alpha'$ of selected components regression coefficients $\alpha'_i$ so that

$$Y_{OTR} = R'\alpha' \tag{10}$$

Transformed regression coefficients $\beta'$ are defined as follows (block 720):

$$\beta' = P'^T_i \alpha'_i \tag{11}$$

and estimated principal component output $Y_{EPCk}$ is then determined based on the transformed regression coefficients $\beta'$ and the standardized training variables $Z_{TRi}$ (730):

$$Y_{EPCk} = Z_{TR}\beta' \tag{12}$$

Test reference data are then defined from the training data $D_{TR}$ (figure 6, block 450).

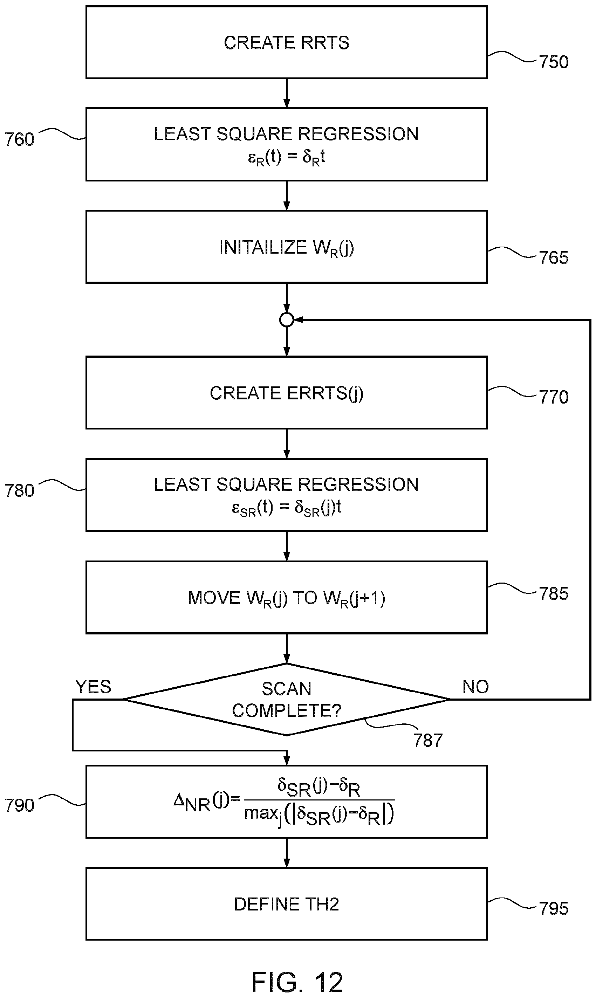

A reference residuals time series RRTS (figure 12, block 750; see also figure 13) is created from reference residuals

$$\varepsilon_R(t) = Y_{OTR}(t) - Y_{EPCk}(t) \tag{13}$$

where t is time index of the series. The reference residuals time series RRTS may include all or part of the reference residuals.

Least square regression is carried out on the reference residuals time series RRTS of the reference residuals $\varepsilon_R(t)$ (block 760), which yields a reference slope $\delta_R$ of a reference fitting line such that

$$\varepsilon_R(t) \;=\; \delta_R t \qquad\qquad\qquad (14)$$

In order to define an acceptable range of variability for data to be tested, a reference moving window $W_R(j)$ having a width of $N_W$ observation is defined and iteratively moved by steps S to scan the whole reference residuals time series RRTS (see figure 13). The index j identifies iterations of the scan. The width $N_W$ and the steps S may be empirically defined in accordance with design preferences. After initialization of the position of the reference moving window $W_R(j)$ in the reference residuals time series RRTS (block 765), at every iteration j the reference residuals $\varepsilon_R(t)$ falling within the reference moving window $W_R(j)$ (i.e. the reference moving window set at the position of the reference residuals time series RRTS corresponding to iteration j) are copied into a reference extension window $W_{ER}(j)$ and appended to the whole reference residuals time series RRTS, thus forming an extended reference residuals time series ERRTS(j) (block 770). Hence, the extended reference residuals time series ERRTS(j) includes reference simulation residuals $\varepsilon_{RS}(t)$, which correspond to the reference residuals $\varepsilon_R(t)$ of the reference residuals time series RRTS, followed by the reference residuals $\varepsilon_R(t)$ falling within the reference moving window $W_R(j)$ at the current stage.

As a result, the slope of a fitting line which includes all the residuals of the extended reference residuals time series ERRTS(j) is slightly changed. The change is considered acceptable, because all the extended reference residuals time series EERTS(j) are completely based on training data $D_{TR}$.

The slope of the fitting line for the extended reference residuals time series EERTS(j), hereinafter simulation reference slope $\delta_{SR}(j)$, is then determined by applying least square regression (block 780):

$$\varepsilon_{SR}(t) \;=\; \delta_{SR}(j)\,t \qquad\qquad\qquad (15)$$

The reference moving window $W_R(j)$ is then moved to the next position, corresponding to iteration j+1 (block 785).

Steps from block 770 to block 785 are iteratively repeated until the whole reference residuals time series RRTS has been scanned (block 787) by the reference moving window $W_R(j)$.

Finally, reference normalized variations $\Delta_{NR}(j)$ are determined as follows (block 790):

$$\Delta_{NR}(j) = \frac{\delta_{SR}(j) - \delta_R}{\max_j(|\delta_{SR}(j) - \delta_R|)} \qquad\qquad\qquad (16)$$

A safety threshold TH2 may be defined from the reference normalized variations $\Delta_{NR}(j)$ for validation and real time operation, thus ending the training (block 795).

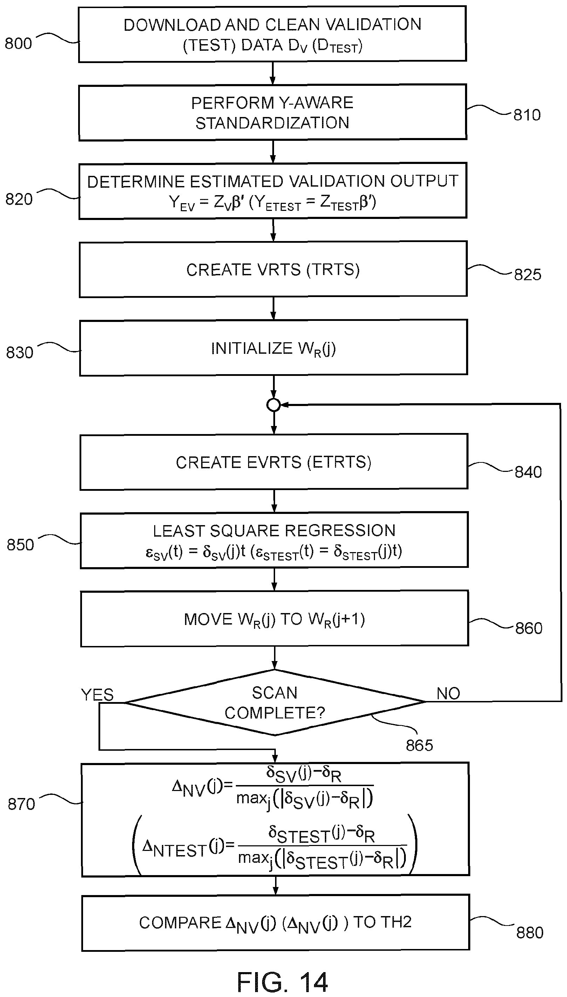

A flowchart of the validation procedure for the trained models is shown in figure 14.

A set of validation data $D_V$ is downloaded from the databases 9 and the validation data $D_V$ are cleaned (block 800). The validation data $D_V$ include observations $X_V$, $Y_V$ that correspond to proper operating conditions of the power plant 1.

Y-aware standardization is carried out (block 810), substantially as already described (figure 7), using the standardization regression vector $\lambda$ of the standardization regression coefficients $\lambda_i$, means vectors $Mi = \text{Mean}(\lambda_i X_{OTRi})$ and means matrix $M = [M_1 \dots Mi \dots M_M]$ as defined during training, so that standardized validation variables $Z_{Vi}$ are determined based on the equation

$$Z_{Vi} \;=\; X_{Vi}\lambda_i \; - M_i \qquad\qquad\qquad (17a)$$

or

$$Z_V \;=\; X_V \lambda - M \qquad\qquad\qquad (17b)$$

where $Z_V = [Z_{V1} \dots Z_{Vi} \dots Z_{VM}]$, $X_{Vi}$ is a vector of the validation observations of the i-th variable, $M_i = \text{Mean}(\lambda_i X_i)$ and $M = [M_1 \dots M_i \dots M_M]$. Standardization is made for every validation vector $X_{Vi}$.

The transformed regression coefficients $\beta'$ are then used for predictions of an estimated validation output variable $Y_{EV}$ as follows (block 820) :

$$Y_{EV} \;=\; Z_V \beta' \qquad\qquad\qquad (18)$$

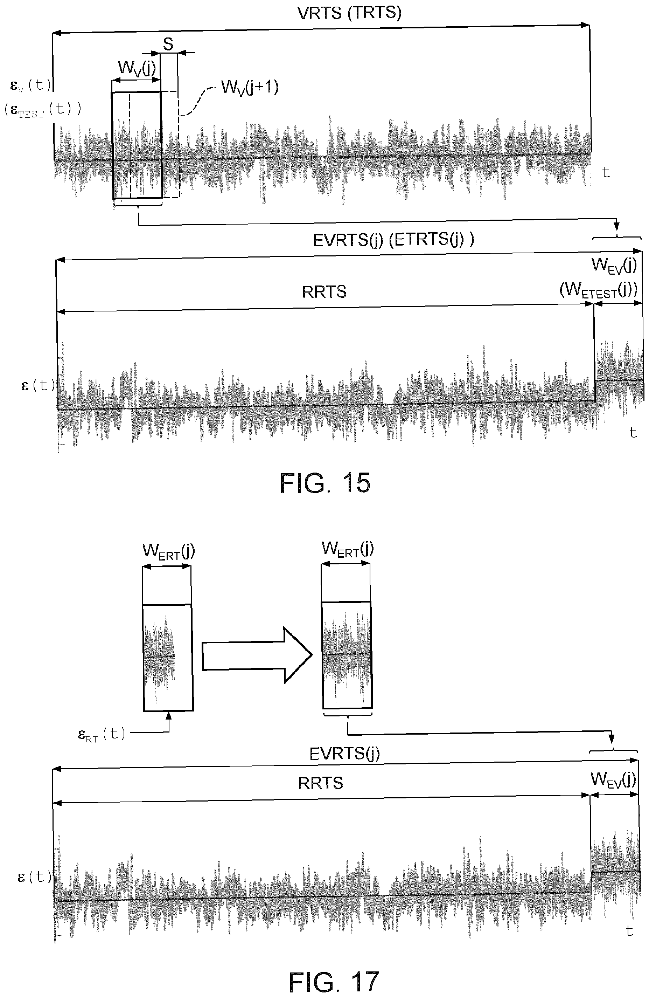

A validation residuals time series VRTS (figure 14, block 830; see also figure 15) is created from validation residuals

$$\varepsilon_V(t) \;=\; Y_V(t) \;-\; Y_{EV}(t) \tag{19}$$

A validation moving window Wv(j) having the same width of Nw observations as the reference moving window $W_R$(j) is defined and iteratively moved by steps S to scan the whole validation residuals time series VRTS (figure 15). Also the steps S are the same as defined in the training stage. After initialization (block 830), at every iteration j the validation residuals $\varepsilon_V$(t) falling within the validation moving window $W_V$(j) (i.e. the validation moving window set at the position of the validation residuals time series VRTS corresponding to iteration j) are copied into a validation extension window $W_{EV}$(j) and appended to the whole reference residuals time series RRTS, thus forming an extended validation residuals time series EVRTS(j) (block 840). In figure 15, the difference between the average value of the validation residuals time series VRTS and the average value of the validation extension window $W_{EV}$(j) is exaggerated in order to visually show how the validation extension window $W_{EV}$(j) may modify the average value of the extended validation residuals time series EVRTS(j). It is however understood that the impact of the validation extension window $W_{EV}$(j) is expected to be much lower, as the validation data $D_V$ include only normal behavior data. Hence, the extended validation residuals time series EVRTS(j) includes simulation validation residuals $\varepsilon_{SV}$(t), which correspond to the reference residuals $\varepsilon_R$(t) of the reference residuals time series RRTS, followed at the current stage by the validation residuals $\varepsilon_V$(t) falling within the validation moving window $W_V$(j) .

A slope of a fitting line for the extended validation residuals time series EVRTS(j), hereinafter simulation validation slope $\delta_{SV}$(j), is then determined by applying least square regression (block 850):

$$\varepsilon_{SV}(t) \;=\; \delta_{SV}(j)\,t \tag{20}$$

The validation moving window Wv(j) is then moved to the next position, corresponding to iteration j+1 (block 860).

Steps from block 840 to block 860 are iteratively repeated until (block 865) the whole validation residuals time series VRTS has been scanned by the validation moving window $W_V$(j).

Finally, validation normalized variations $\Delta_{NV}$(j) are determined as follows (block 870):

$$\Delta_{NV}(j) = \frac{\delta_{SV}(j) - \delta_R}{\max_j(|\delta_{SV}(j) - \delta_R|)} \tag{21}$$

and compared (block 880) to the safety threshold TH2 defined from the reference normalized variations $\Delta_{NR}$(j) during the training stage. In case of one or more of the validation normalized variations $\Delta_{NV}$(j) fail to meet the safety threshold TH2, the training procedure may be refined or repeated, e.g. using a different or more numerous set of training data.

Then, a test procedure may be carried out, by repeating the same steps 800 to 880 of the validation procedure (figures 13 and 14) on a set of test data $D_{TEST}$, that include observations $X_{TEST}$, $Y_{TEST}$ not necessarily corresponding to normal operating conditions of the power plant 1. Specifically, test data $D_{TEST}$ are cleaned and Y-aware standardization is carried out (block 810) using the standardization regression vector $\lambda$ of the standardization regression coefficients $\lambda_i$, means vectors Mi = Mean ($\lambda_i X_{OTRi}$) and means matrix M = [$M_1$ ... Mi ... $M_M$] as defined during training, thus determining standardized test variables $Z_{TESTi}$ as

$$Z_{TESTi} \;=\; X_{TESTi}\lambda_i \;-M_i \tag{17a'}$$

for every validation vector $X_{TESTi}$.

The transformed regression coefficients $\beta'$ are then used for predictions of an estimated test output variable $Y_{ETEST}$ as

$$Y_{ETEST} \;=\; Z_{TEST}\beta' \tag{18'}$$

A test residuals time series ETRTS is created from test residuals

$$\varepsilon_{TEST}(t) \;=\; Y_{TEST}(t) \;-\; Y_{ETEST}(t) \tag{19'}$$

A test moving window $W_{TEST}$(j) having the same width of Nw observations as the reference moving window $W_R$(j) is defined and iteratively moved by steps S to scan the whole validation residuals time series TRTS. After initialization, at every iteration j the validation residuals $\varepsilon_{TEST}$(t) falling within the test moving window $W_{TEST}$(j) are copied into a test extension window $W_{ETEST}$(j) and appended to the whole reference residuals time series RRTS, thus forming an extended test residuals time series ETRTS(j).

A simulation test slope $\delta_{STEST}(j)$ (slope of a fitting line for the extended validation residuals time series EVRTS(j) is determined by applying least square regression as

$$\varepsilon_{STEST}(t) = \delta_{STEST}(j)t \qquad\qquad (20')$$

The test moving window $W_{TEST}(j)$ is then moved to the next position, corresponding to iteration j+1 and steps 840 to 060 are iteratively repeated until the whole test residuals time series TRTS has been scanned by the validation moving window $W_T(j)$.

Finally, test normalized variations $\Delta_{NTEST}(j)$ are determined as

$$\Delta_{NTEST}(j) = \frac{\delta_{STEST}(j) - \delta_R}{\max_j(|\delta_{STEST}(j) - \delta_R|)} \qquad\qquad (21')$$

and compared to the safety threshold TH2 defined from the reference normalized variations $\Delta_{NR}(j)$ during the training stage.

Warnings may be generated in case of one or more of the test normalized variations $\Delta_{NTEST}(j)$ fail to meet the safety threshold TH2. Also, trends in validation normalized variations $\Delta_{NV}(j)$ may be determined to estimate time-to-fault (e.g. based on detected trends, remaining time before the validation normalized variations $\Delta_{NV}(j)$ exceed the safety threshold TH2). As the test data $D_{TEST}$ are historical records that correspond to known state of the power plant 1, whether of normal or abnormal behavior, warnings and time-to-fault estimations may be a posteriori analyzed to determine accuracy of the predictions based on the trained model.

Once validation has been completed, again the diagnostic system 2 is run on the power plant 1. Real-time observations $X_{RT} = [X_{RT1}, ..., X_{RTi}, ..., X_{RTM}]$, $Y_{RT}$ of the M input variables and output variable, respectively, are received individually or in batches from the power plant 1, either directly or after storage and download from the databases 9.

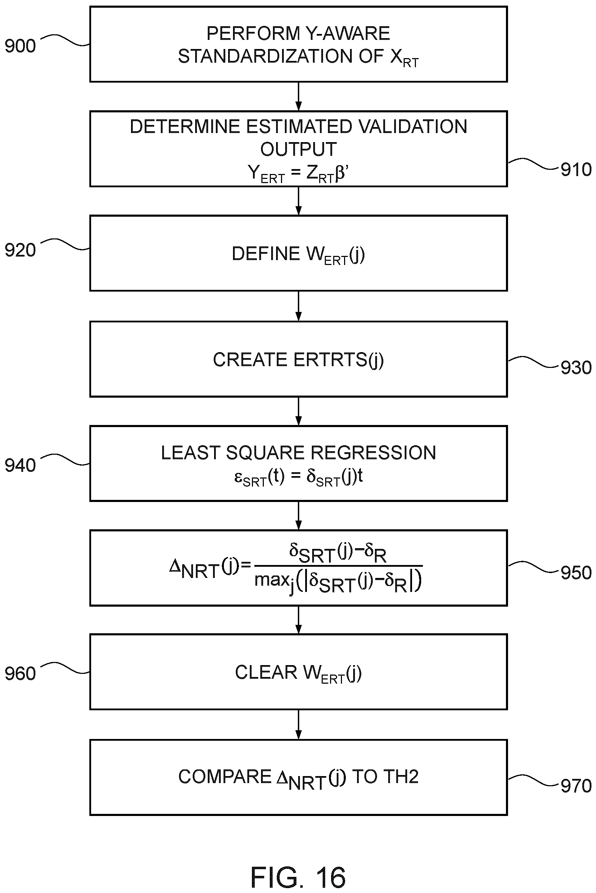

As real-time observations $X_{RT}$ are received, Y-aware standardization is carried out (figure 16, block 900) as already described (figure 7), using the standardization regression vector $\lambda$ of the standardization regression coefficients $\lambda_i$, means vectors $Mi = Mean(\lambda_i X_{OTRi})$ and means matrix $M = [M_1 ... M_i ... M_M]$ as defined during training, so that standardized real-time variables $Z_{RTi}$ are determined based on the equation

$$Z_{RTi} = X_{RTi}\lambda_i - M_i \qquad\qquad (22a)$$

or

$$Z_{RT} = X_{RT}\lambda - M \qquad\qquad (22b)$$

where $Z_{RT} = [Z_{RT1} ... Z_{RTi} ... Z_{RTM}]$. In one embodiment, the real-time observations $X_{RT}$ are individually processed as soon as they are received, so the standardized real-time variables $Z_{RT}$ are a single vector instead of a matrix, as for standardized training variables $Z_{TRi}$ and standardized validation variables $Z_{Vi}$. However, also the real-time observations $X_{RT}$ may be processed in batches.

After Y-aware standardization, the transformed regression coefficients $\beta'$ are used for predictions of an estimated real-time output variable $Y_{ERT}$ as follows (block 910):

$$Y_{ERT} = Z_{RT}\beta' \qquad\qquad (23)$$

Real-time residuals $\varepsilon_{RT}(t)$

$$\varepsilon_{RT}(t) = Y_{RT}(t) - Y_{ERT}(t) \qquad\qquad (24)$$

are then calculated and temporarily stored in a buffer (block 920) defining a real-time extension window $W_{ERT}(j)$ with the same width of $N_W$ observations as the reference moving window $W_R$ (see also figure 17).

Once filled with real-time residuals $\varepsilon_{RT}(t)$, the real-time extension window $W_{ERT}$ is appended to the whole reference residuals time series RRTS, thus forming an extended real-time residuals time series ERTRTS(j) (block 930). Hence, the extended real-time residuals time series ERTRTS(j) includes simulation real-time residuals $\varepsilon_{SRT}(t)$, which correspond to the reference residuals $\varepsilon_R(t)$ of the reference residuals time series RRTS, followed by real-time residuals $\varepsilon_{RT}(t)$ in the real-time extension window $W_{ERT}$.

A slope of a fitting line for the extended real-time residuals time series ERTRTS(j), hereinafter simulation real-time slope $\delta_{SRT}$(j), is then determined by applying least square regression (block 940):

$$\varepsilon_{SRT}(t) \ = \ \delta_{SRT}(j)t \qquad\qquad (20'')$$

Finally, real-time normalized variations $\Delta_{NRT}$(j) are determined as follows (block 950):

$$\Delta_{NRT}(j) = \frac{\delta_{SRT}(j) - \delta_R}{\max_j(|\delta_{SRT}(j) - \delta_R|)} \qquad\qquad (21'')$$

and compared (block 960) to the safety threshold TH2 defined from the reference normalized variations $\Delta_{NRT}$(j) during the training stage.

Then, the real-time extension window $W_{ERT}$(j) is cleared (block 970) completely or in part and, once filled again with a new series of real-time residuals $\varepsilon_{RT}$(t), the steps from block 930 to block 950 are iteratively repeated. If the real-time extension window $W_{ERT}$ is only partly cleared, at the next iteration j+1 real-time extension window $W_{ERT}$(j+1) will be shifted and overlap the previous real-time extension window $W_{ERT}$(j). The shift may be the same as the steps S for the scan of the reference residuals time series RRTS.

It is finally apparent that changes and variations may be made to the diagnostic system described and illustrated without departing from the scope of protection of the accompanying claims.

**Claims**

1. A computer-implemented method of diagnosing faults in a power plant, comprising:

   acquiring plant data through an interface (2a) for coupling with at least one power plant (1);
   creating databases (9) from the plant data provided by the data acquisition level (2a), managing and accessing the databases (9);
   training a plant model for providing estimated plant outputs ($Y_E$), based on a series of training observed input variables ($X_{OTR}$), selected from the plant data;
   validating the trained plant models based on the plant data from the at least one power plant (1) and/or the databases (9); and
   using the trained model to continuously provide estimated plant outputs ($Y_E$) based on current observed variables ($X_{OC}$) of the power plant (1) during operation of the power plant (1);
   wherein the plant model is a Gaussian mixture model with a programmed number of states (M), training comprises carrying out a first expectation-maximization procedure (230, 240) and validating comprises carrying out a second expectation-maximization procedure (330-360).

2. The method according to claim 1, wherein the first expectation-maximization procedure (230, 240) is carried out on a set of training data (DTR), selected from the plant data and corresponding to correct operation periods of the power plant (1), and the second expectation-maximization procedure (330-360) is carried out on a set of validation data (DV), selected from the plant data and not coincident with set of the training data (DTR).

3. The method according to claim 2, wherein carrying out the first expectation-maximization procedure (230, 240) comprises initializing priors parameters (PRi) and a centroid ($\mu_i$) of each state (M) of the Gaussian mixture model by k-means algorithm and initializing a covariance matrix ($\Sigma_i$) as a diagonal matrix.

4. The method according to claim 3, wherein carrying out the first expectation-maximization procedure (230, 240) comprises:

   determining (230) posterior probabilities ($P(i|X_{OTRJ})$) for each state conditional to a training observation ($X_{OTRJ}$) selected from the set of training data (DTR); and
   determining a cumulated posterior probability as

   $$\sum_{i=1}^{M} P(i \,|\, X_{OTRJ})$$

   wherein $P(i|X_{OTRJ})$ is the posterior probabilities for a i-th state conditional to a j-th training observation ($X_{OTRJ}$).

5. The method according to claim 4, wherein carrying out the first expectation-maximization procedure (230, 240) comprises updating the priors parameters (PRi) and the centroid parameters ($\mu_i$) of each state of the Gaussian mixture model using the cumulated posterior probability and determining a training likelihood function ($L_{TR}$) from the updated priors parameters (PRi) and centroid parameters ($\mu_i$).

6. The method according to claim 5, comprising iteratively repeating the first expectation-maximization procedure (230, 240) and terminating the first expectation-maximization procedure (230, 240) when a difference between the training likelihood function ($L_{TR}$) at a current iteration and at an immediately previous iteration is below a programmed training threshold ($TH_{TR}$).

7. The method according to any one of claims 3 to 6, wherein carrying out the second expectation-maximization procedure (330-360) comprises initializing (320) an optimized covariance matrix ($\Sigma_{SUM}$) defined as a training covariance matrix ($\Sigma_{TR}$) resulting from the first expectation-maximization procedure (320, 240).

8. The method according to claim 7, wherein the optimized covariance matrix ($\Sigma_{SUM}$) is defined as

$$\Sigma_{SUM} \; = \; \Sigma_{TR} \; + \; \Theta$$

wherein is $\Sigma_{SUM}$ the optimized covariance matrix, $\Sigma_{TR}$ is the training covariance matrix and $\Theta$ is an optimizing matrix to be iteratively updated based on the set of validation data (DV).

9. The method according to claim 7 or 8, wherein carrying out the second expectation-maximization procedure (330-360) comprises:

   determining (330) posterior probabilities ($P(i|X_{OVK})$) for each state conditional to a current validation observation ($X_{OVK}$) selected from the set of validation data (DV); and
   determining (350) the optimizing matrix ($\Theta$) based on the posterior probability $P(i|X_{OVK})$ and a distance ($X_{OVK} - \mu_i$) between the current validation observations ($X_{OVK}$) and the centroid ($\mu_i$) of each i-th state of the Gaussian Mixture Model, wherein the optimizing matrix ($\Theta$) is determined so as to maximize, for each i-th state, a probability that the current validation observations ($X_{OVK}$) belongs to the said i-th state.

10. The method according to claim 9, wherein carrying out the second expectation-maximization procedure (330-360) comprises updating the optimized covariance matrix ($\Sigma_{SUM}$) and determining a validation likelihood function ($L_V$) from the updated optimized covariance matrix ($\Sigma_{SUM}$).

11. The method according to claim 10, comprising iteratively repeating the second expectation-maximization procedure (330-360) and terminating the second expectation-maximization procedure (330-360) when a difference between the validation likelihood function ($L_V$) at a current iteration and at an immediately previous iteration is below a programmed validation threshold ($TH_V$).

12. The method according to any one of claims 9 to 11, wherein the second expectation-maximization procedure (330-360) is iteratively repeated for each validation observation ($X_{OVK}$) of the set of validation data (DV).

13. The method according to any one of claims 9 to 12, wherein carrying out the second expectation-maximization procedure (330-360) comprises determining (340) state expected outputs (y(i)) for each i-th state based on the state centroids ($\mu_i$) and the current optimized covariance matrix ($\Sigma_{SUM}$); and combining the state expected outputs y(i) to determine the estimated plant outputs ($Y_E$) for the current iteration.

14. The method according to any one of the preceding claims, wherein the input variables (X) include observations of a first set of plant variables and the plant outputs ($Y_E$) include estimated values of a second set of plant variables, and wherein the second set of plant variables is a subset of the first set of plant variables.

15. A diagnostic system for a power plant comprising:

   a data acquisition level (2a), forming an interface for coupling with at least one power plant (1) and configured to receive signals (PS, CS) from the power plant (1);
   a database level (2b), configured to create databases (9) from data provided by the data acquisition level (2a) and to manage and access the databases (9);

a data processing and analysis level (2c) configured to implement diagnostic functions and comprising a diagnostic unit (10);

wherein the diagnostic unit (10) is configured to carry out the method according to any one of the preceding claims.

FIG. 1

X → POWER PLANT [1] → Y

ESTIMATOR [11] → $Y_E$

12 → (−) → $\varepsilon = Y - Y_E$

10

FAULT DETECTION — 13

FAULT DIAGNOSTIC — 15

FAULT PROGNOSTIC — 16

CLASSIFICATION — 17

FIG. 2

100 — TRAIN MODELS

VALIDATE MODELS — 110

120 — PROVIDE $Y_E$

FIG. 3

**FIG. 4**

300 — DOWNLOAD AND CLEAN
VALIDATION DATA $D_V$

NORMALIZE
VALIDATION DATA $D_V$ — 310

320 — INITIALIZE $\Sigma_{SUM}$, $\Theta$

330 — EXPECTATION
DETERMINE $P(i|X_K)$

DETERMINE $y(i)$, $y_E$ — 340

350 — MAXIMIZATION
DETERMINE $\Theta$, UPDATE $\Sigma_{SUM}$

360
YES          $\Delta L < TH$          NO

370 — TERMINATE
VALIDATION

FIG. 5

400 — DOWNLOAD AND CLEAN TRAINING DATA $D_{TR}$

PERFORM Y-AWARE STANDARDIZATION — 410

420 — CROSS-VALIDATION

PRINCIPAL COMPONENT SELECTION — 430

440 — PRINCIPAL COMPONENT REGRESSION ON THE SELECTED COMPONENTS

DEFINITION OF TEST REFERENCE DATA — 450

FIG. 6

500 — LEAST SQUARE REGRESSION
$Y_{TR} = X_{OTR}\lambda$

DETERMINE STANDARDIZED TRAINING VARIABLES
$Z_{TR} = X_{OTR}\lambda - M$ — 510

FIG. 7

550 —

PRINCIPAL COMPONENT ANALYSIS OF THE
STANDARDIZED TRAINING VARIABLES $Z_{TRI}$
R, P

LEAST SQUARE REGRESSION
$Y_{OTR} = R\alpha$

— 560

## FIG.8

600 —

$$\beta(k) = \sum_{i=1}^{K} P_i^T \alpha_i$$

DETERMINE ESTIMATED VALIDATION OUTPUT
$Y_{EVk} = ZTR\beta(k)$

— 610

620 —

DETERMINE SUM OF SQUARED RESIDUALS
$$SSR(k) = \sum_{i=1}^{N} (Y_{OTRi} - Y_{EVki})^2$$

## FIG. 9

650 —

NORMALIZE SSR(k)

DETERMINE DIFFERENCES
$\Delta(k, k-1)$

— 660

670 —

COMPARE DIFFERENCES
$\Delta(k, k-1)$ TO SELECTION
THRESHOLD THS

SELECT PRINCIPAL
COMPONENTS PRODUCING
$\Delta(K, K-1) > TH1$

— 680

## FIG. 10

700

PRINCIPAL COMPONENT ANALYSIS
LIMITED TO SELECTED PRINCIPAL
COMPONENTS

LEAST SQUARE REGRESSION
$Y_{OTR} = R'\alpha'$

710

720

$\beta' = P'^T_i \alpha'_i$

DETERMINE ESTIMATED PRINCIPAL
COMPONENT OUTPUT
$Y_{EPCk} = ZTR\beta'$

730

FIG. 11

ERRTS(j)

RRTS

$W_{ER}(j)$

$\varepsilon(t)$

S

$W_R(j)$

$W_R(j+1)$

t

FIG. 13

CREATE RRTS — 750

LEAST SQUARE REGRESSION
$\varepsilon_R(t) = \delta_R t$ — 760

INITAILIZE $W_R(j)$ — 765

CREATE ERRTS(j) — 770

LEAST SQUARE REGRESSION
$\varepsilon_{SR}(t) = \delta_{SR}(j)t$ — 780

MOVE $W_R(j)$ TO $W_R(j+1)$ — 785

YES ← SCAN COMPLETE? → NO — 787

$$\Delta_{NR}(j) = \frac{\delta_{SR}(j) - \delta_R}{\max_j(|\delta_{SR}(j) - \delta_R|)}$$ — 790

DEFINE TH2 — 795

FIG. 12

DOWNLOAD AND CLEAN VALIDATION (TEST) DATA $D_V$ ($D_{TEST}$) — 800

PERFORM Y-AWARE STANDARDIZATION — 810

DETERMINE ESTIMATED VALIDATION OUTPUT $Y_{EV} = Z_V\beta'$ ($Y_{ETEST} = Z_{TEST}\beta'$) — 820

CREATE VRTS (TRTS) — 825

INITIALIZE $W_R(j)$ — 830

CREATE EVRTS (ETRTS) — 840

LEAST SQUARE REGRESSION $\varepsilon_{SV}(t) = \delta_{SV}(j)t$ ($\varepsilon_{STEST}(t) = \delta_{STEST}(j)t$) — 850

MOVE $W_R(j)$ TO $W_R(j+1)$ — 860

SCAN COMPLETE? — 865

YES    NO

$$\Delta_{NV}(j) = \frac{\delta_{SV}(j) - \delta_R}{\max_j(|\delta_{SV}(j) - \delta_R|)}$$

$$\left( \Delta_{NTEST}(j) = \frac{\delta_{STEST}(j) - \delta_R}{\max_j(|\delta_{STEST}(j) - \delta_R|)} \right)$$

— 870

COMPARE $\Delta_{NV}(j)$ ($\Delta_{NV}(j)$) TO TH2 — 880

FIG. 14

FIG. 15

FIG. 17

900 — PERFORM Y-AWARE
STANDARDIZATION OF $X_{RT}$

DETERMINE ESTIMATED VALIDATION
OUTPUT
$Y_{ERT} = Z_{RT}\beta'$ — 910

920 — DEFINE $W_{ERT}(j)$

CREATE ERTRTS(j) — 930

940 — LEAST SQUARE REGRESSION
$\varepsilon_{SRT}(t) = \delta_{SRT}(j)t$

$$\Delta_{NRT}(j) = \frac{\delta_{SRT}(j) - \delta_R}{\max_j(|\delta_{SRT}(j) - \delta_R|)}$$ — 950

960 — CLEAR $W_{ERT}(j)$

COMPARE $\Delta_{NRT}(j)$ TO TH2 — 970

FIG. 16

Europäisches
Patentamt

European
Patent Office

Office européen
des brevets

**EUROPEAN SEARCH REPORT**

Application Number

EP 24 22 0930

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/086283 A1 (YUAN CHAO [US] ET AL) 10 April 2008 (2008-04-10) * paragraphs [0003] - [0074] * ----- | 1-15 | INV. G05B23/02 G06N7/01 G06N20/00 |
| X | CN 114 139 602 A (RANKUN WISDOM SCIENCE AND TECH STOCK LIMITED COMPANY) 4 March 2022 (2022-03-04) * the whole document * ----- | 1-15 | |
| X | CN 114 154 254 A (UNIV NORTH CHINA ELECTRIC POWER) 8 March 2022 (2022-03-08) * the whole document * ----- | 1,2,15 | |

TECHNICAL FIELDS
SEARCHED (IPC)

G05B
G06N

The present search report has been drawn up for all claims

| Place of search | Date of completion of the search | Examiner |
|---|---|---|
| Munich | 3 April 2025 | Barriuso Poy, Alex |

## ANNEX TO THE EUROPEAN SEARCH REPORT
## ON EUROPEAN PATENT APPLICATION NO.

EP 24 22 0930

This annex lists the patent family members relating to the patent documents cited in the above-mentioned European search report.
The members are as contained in the European Patent Office EDP file on
The European Patent Office is in no way liable for these particulars which are merely given for the purpose of information.

03-04-2025

| Patent document cited in search report | Publication date | Patent family member(s) | Publication date |
|---|---|---|---|
| US 2008086283 A1 | 10-04-2008 | NONE | |
| CN 114139602 A | 04-03-2022 | NONE | |
| CN 114154254 A | 08-03-2022 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102023000027966

- IT 102023000027975